# EUROPÄISCHE PATENTSCHRIFT

(11) **EP 2 214 293 B1**
(45) Veröffentlichungstag und Bekanntmachung des Hinweises auf die Patenterteilung: **17.12.2014**
(21) Anmeldenummer: 09151601.3
(22) Anmeldetag: 29.01.2009
(51) Int. Cl.: H02K 5/10, H02K 3/52, H02K 21/22, H02K 7/14

(54) **Statoreinheit mit Feuchtigkeitsabdichtung**
Stator unit with moisture seal
Unité de stator dotée d'un joint détanchéité

(43) Veröffentlichungstag der Anmeldung: 04.08.2010
(73) Patentinhaber: ebm-papst Mulfingen GmbH & Co. KG, 74673 Mulfingen (DE)
(72) Erfinder: Best, Dieter, 74653, Ingelfingen (DE); Maschke, Matthias, 74523, Schwäbisch Hall (DE)
(74) Vertreter: Patentanwälte Dr. Solf & Zapf

(56) Entgegenhaltungen:
- WO-A-2004/013944
- DE-U1- 20 207 233
- DE-U1-202004 010 513
- GUSTAVO LEDEZMA ET AL: "Heat sinks with sloped plate fins in natural and forced convection", INTERNATIONAL JOURNAL OF HEAT AND MASS TRANSFER, vol. 39, no. 9, 1 June 1996 (1996-06-01), pages 1773-1783, XP055123933,

## Beschreibung

Die vorliegende Erfindung betrifft eine Statoreinheit für einen Elektromotor, insbesondere einen Außenläufermotor, bestehend aus einem Stator mit einem Statorblechpaket und Statorwicklungen und einer Statorbuchse sowie einem einendig ausgebildeten Statorflansch, an dem ein Gehäuseflansch eines Gehäuses zur Aufnahme einer Motorsteuerung oder dergleichen befestigt ist sowie mit vom Stator durch Durchtrittsöffnungen des Gehäuseflansches verlaufenden Motoranschlusskontakten und mit durch Befestigungslöcher des Gehäuseflansches verlaufenden und im Stator befestigten Befestigungsmitteln, wobei eine Dichtscheibe für die Abdichtung der Motoranschlusskontakte vorhanden ist.

Bei einer derartigen bekannten Statoreinheit gemäß DE 20 2004 010 513 U1 tritt das Problem auf, dass in den Stator eingedrungene Feuchtigkeit von dort in das am Gehäuseflansch befestigte Gehäuse, das die Motorelektronik enthält, eindringen kann, da die zwischen dem Stator und dem Motorgehäuse vorhandenen Durchtrittsöffnungen für die Motoranschlusskontakte und für die Befestigungsmittel den Durchtritt der Feuchtigkeit ermöglichen und wobei lediglich eine Abdichtung innerhalb des Gehäuses selbst erfolgt.

Der vorliegenden Erfindung liegt die Aufgabe zu Grunde, eine wirksame Abdichtung zu ermöglichen, die kostengünstig ist und die eine einfache Montage ermöglicht.

Erfindungsgemäß wird dies dadurch erreicht, dass der Gehäuseflansch in seinem Mittenbereich einen Anlageabschnitt aufweist, und die Dichtscheibe zwischen dem Stator und dem Gehäuseflansch im Bereich des Anlageabschnittes angeordnet ist, und die ° Dichtscheibe Dichtbereiche aus elastischem Kunststoff aufweist, die derart angeordnet und ausgebildet sind, dass eine unmittelbare und/oder mittelbare Abdichtung der Durchtrittsöffnungen und/oder der Befestigungslöcher gegen Feuchtigkeitsdurchtritt gegeben ist, indem die Dichtscheibe aus einem Tragkörper gebildet ist, an dem die Dichtbereiche als innerer Dichtbereich, als mittiger Dichtbereich und als äußerer Dichtbereich ausgebildet sowie im Anlageabschnitt die Durchtrittsöffnungen für die Motoranschlusskontakte und die Befestigungslöcher für die Befestigungsmittel vorhanden sind.

Erfindungsgemäß sind somit alle notwendigen Dichtmittel gemeinsam auf der Dichtscheibe konzentriert, so dass eine Einzelabdichtung entfällt. Die Dichtscheibe kann unabhängig vom Stator und Gehäuseflansch hergestellt werden und kann auf dem Stator vormontiert werden und die Abdichtung erfolgt dann bei der Endmontage von Stator und Gehäuseflansch. Durch die erfindungsgemäße Fertigung als ZweiKomponenten-Spritzgussteil ergeben sich günstige Herstellkosten und es entfällt eine Herstellung einer Vielzahl von einzelnen Dichtelementen. Die erfindungsgemäße Dichtscheibe ermöglicht dabei, dass nicht jede einzelne Öffnung separat abgedichtet werden muss, sondern es kann mit der erfindungsgemäßen Dichtscheibe auch eine mittelbare Abdichtung dadurch erzielt werden, dass abgedichtete Kammern erzeugt werden, in denen die jeweiligen Öffnungen angeordnet sind.

Vorteilhafte Ausbildungen der Erfindung sind in den Unteransprüchen enthalten und an Hand des in den beiliegenden Zeichnungen dargestellten Ausführungsbeispiels wird die Erfindung näher erläutert. Weiterhin bezieht sich die vorliegende Erfindung auf eine Dichtscheibe zur Verwendung mit der erfindungsgemäßen Statoreinheit.

In den nachstehenden Figuren sind die gleichen Teile mit jeweils denselben Bezugsziffern gekennzeichnet.

Es zeigen:
- Fig. 1: einen Querschnitt durch eine erfindungsgemäße Statoreinheit,
- Fig. 2: eine perspektivische Ansicht eines Stators der Statoreinheit gemäß Fig. 1,
- Fig. 3: eine Ansicht auf einen Gehäuseflansch der Statoreinheit gemäß Fig. 1,
- Fig. 4: eine Rückansicht auf eine erfindungsgemäße Dichtscheibe,
- Fig. 5: eine Vorderansicht auf eine erfindungsgemäße Dichtscheibe,
- Fig. 6: eine perspektivische Ansicht auf einen erfindungsgemäßen Stator mit vormontierter erfindungsgemäßer Dichtscheibe,
- Fig. 7: eine Einzelheit bei X in Fig. 1 in vergrößerter Darstellung.

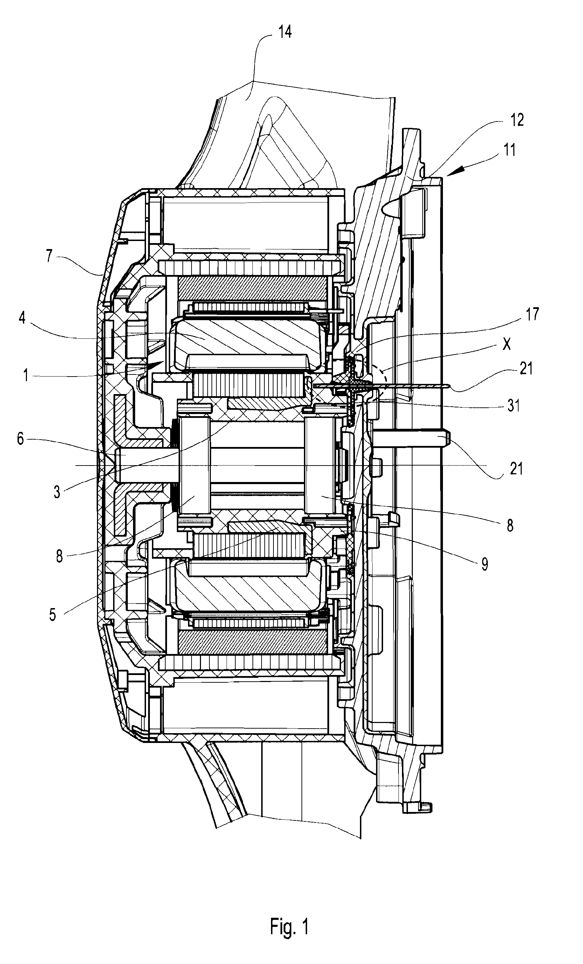

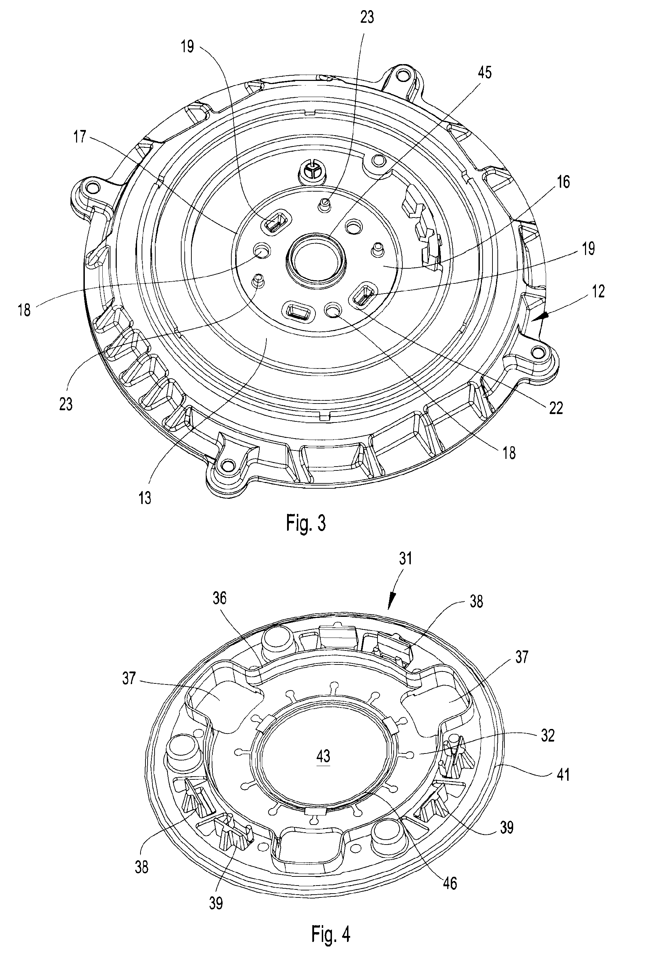

Die vorliegende Erfindung betrifft eine Statoreinheit für einen elektrischen Außenläufermotor, die aus einem Stator 1 besteht, der aus einem Statorblechpaket 2 mit Statorwicklungen 4 und einer Statorbuchse 3 gebildet wird, siehe Fig. 1. Die Statorbuchse 3 ist Teil einer innen- und stirnseitigen Kunststoffumspritzung des Statorblechpaketes 2 und enthält am gehäuseflanschseitigen Ende des Blechpaketes 2 eine in den Innenraum des Blechpaketes 2 eingepresste metallische Buchse 5 mit Domen 26 zur Montage am Gehäuseflansch 12. Auf dem Statorblechpaket 2 sind Statorwicklungen 4 gewickelt. Innerhalb der Statorbuchse 3 ist eine Rotorwelle 6 eines Außenläuferrotors 7 mittels Lagern 8 gelagert. Wie vorstehend erwähnt, enthält die Statorbuchse 3 einendig die Buchse 5, die einen Statorflansch 9 ausbildet, an dem ein Gehäuse 11 zur Aufnahme einer Motorelektronik befestigt wird. In Fig. 1 ist von dem Gehäuse 11 ein Gehäuseflansch 12, insbesondere als Kühlflansch dargestellt, der unmittelbar mit dem Statorflansch 9 verbunden ist. Der Außendurchmesser des Gehäuseflansches 12 ist größer als der Außendurchmesser des Stators 1; er entspricht aber etwa dem Außendurchmesser des Außenläuferrotors 7. Der Gehäuseflansch 12 besteht vorzugsweise aus Aluminium und ist teilweise mit einer Kunststoffumspritzung 13 zur beidseitigen Isolierung umgeben. Wenn der Außenläuferrotor 7 gleichzeitig als Nabe eines Ventilators dient, wie im dargestellten Ausführungsbeispiel gezeigt, sind auf dem Außenumfang des Außenläuferrotors 7 Ventilatorflügel 14 befestigt. Der Gehäuseflansch 12 weist, siehe Fig. 3, in seinem Mittenbereich einen Anlageabschnitt 16 auf, der vorzugsweise kreisförmig geformt ist und umfangsgemäß von einem axial vorstehenden Randsteg 17 umfasst wird. Dieser Randsteg 17 wird von der Kunststoffumspritzung 13 gebildet. Der Anlageabschnitt 16 kann ebenfalls mit der Kunststoffumspritzung 13 versehen sein. Innerhalb des Anlageabschnittes 16 sind vorzugsweise drei um 120 ° gegeneinander versetzte Befestigungslöcher 18 enthalten sowie im dargestellten Beispiel drei Durchtrittsöffnungen 19 zum Hindurchstecken von zungenförmigen Motoranschlusskontakten 21, die einendig mit den Statorspulen 4 verbunden sind. Die Durchtrittsöffnungen 19 sind in von der Kunststoffumspritzung 13 innerhalb des Anlageabschnitts 16 gebildeten Isolierbuchsen 22 gebildet. Zwischen den Befestigungslöchern 18 sind jeweils drei gegeneinander versetzte Montagezapfen 23 am Anlageabschnitt 16 angeformt.

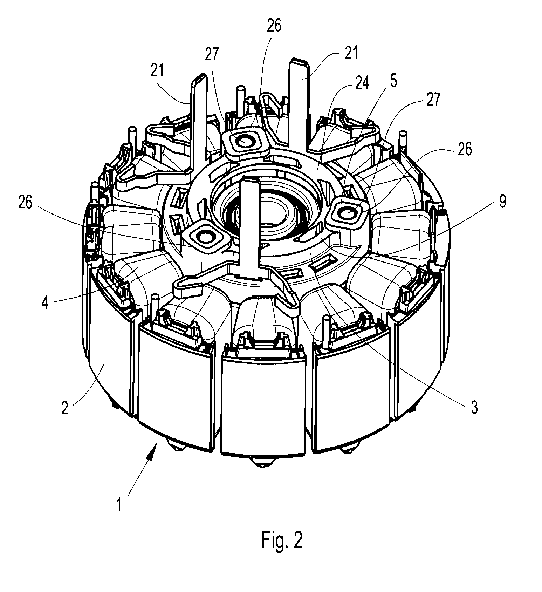

Der Statorflansch 9 besitzt, siehe Fig. 2, eine ringförmige Stirnfläche 24, an der vorzugsweise drei um 120 ° gegeneinander versetzte Dome 26 vorhanden sind, die Einschrauböffnungen 27 besitzen. Die Dome 26 sind Teil der metallischen Buchse 5, die in das Statorblechpaket 2 eingepresst ist. Im montierten Zustand, wie in Fig. 1 dargestellt, fluchten die Einschrauböffnungen 27 mit den Schraublöchern 18 und es können von der Seite des Kühlflansches 12 her Befestigungsschrauben eingeschraubt werden, wodurch der Stator 1 mit dem Kühlflansch 12 verbunden wird. Die Dome 26 stehen in axialer Richtung mit ihrer Endfläche gegenüber der Stirnfläche 24 des Statorflansches 9 vor. Hierbei sind die Dome 26 von einer Kunststoffumspritzung des Stators 1 ebenfalls umspritzt.

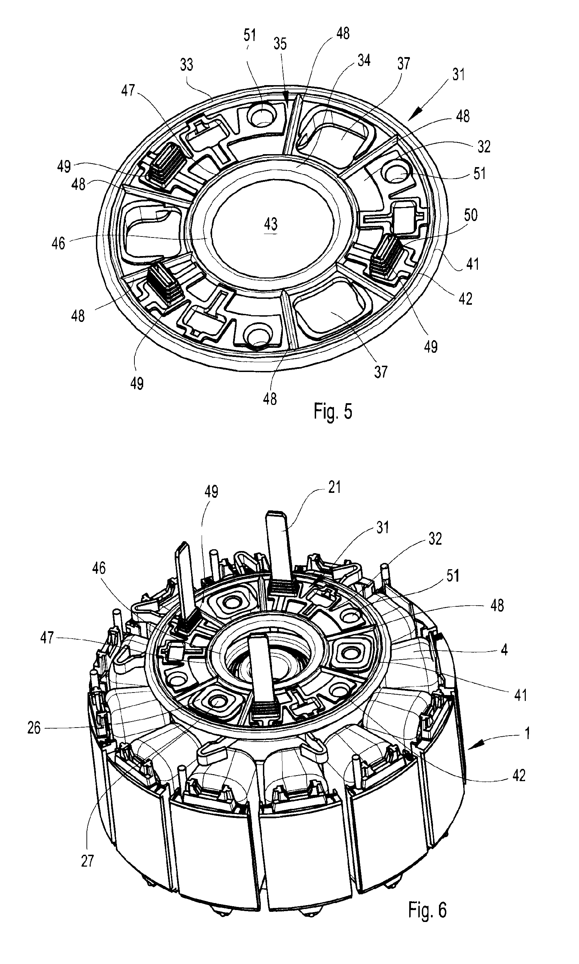

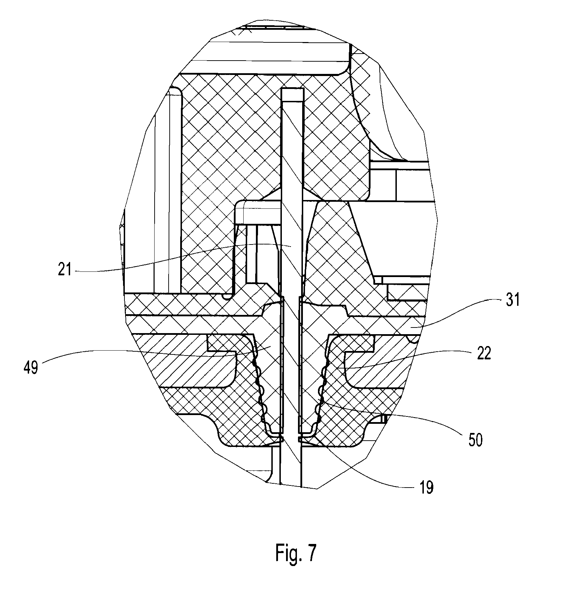

Durch einen zwischen dem Stator 1 und dem Kühlflansch 12 vorhandenen umfangsgemäßen Montagespalt, der auch deshalb erforderlich ist, damit der Außenläuferrotor 7 nicht in Berührung mit dem Kühlflansch 12 kommt, kann von außen in das Innere des Stators 1 Feuchtigkeit eindringen. Diese Feuchtigkeit kann über die Durchtrittsöffnungen 19 sowie die Befestigungslöcher 18 in das Innere des am Gehäuseflansch 12 befestigten Elektronikgehäuses gelangen. Um ein Eindringen der Feuchtigkeit in das Elektronikgehäuse weitgehend zu verhindern und damit eine höhere IP-Schutzklasse, insbesondere IP-69K zu erfüllen, ist nun erfindungsgemäß vorgesehen, dass zwischen dem Statorflansch 9 und dem Gehäuseflansch 12 im Bereich des Anlageabschnittes 16 eine Dichtscheibe 31 angeordnet ist. Diese Dichtscheibe ist in den Fig. 4, 5 dargestellt. Die Dichtscheibe 31 besteht aus einem Tragkörper 32 und aus an dem Tragkörper 32 ausgebildeten Dichtbereichen, und zwar aus einem äußeren Dichtbereich 33 und einem inneren Dichtbereich 34 sowie aus einem mittigen Dichtbereich 35. Durch diese Dichtbereiche 33, 34, 35 erfolgt eine mittelbare und/oder unmittelbare Abdichtung der Durchtrittsöffnungen 19 und der Befestigungslöcher 18, so dass keine Feuchtigkeit vom Stator 1 in das Elektronikgehäuse 11 gelangen kann. Die Dichtbereiche 33, 34, 35 bestehen aus einem elastischen Dichtwerkstoff aus Kunststoff und der Tragkörper 32 besteht aus einem Hartmaterial aus Kunststoff. Das harte Kunststoffmaterial ist vorzugsweise Ultramid, wobei es sich um ein glasfaserverstärktes Polyamid handelt und bei dem weicheren Dichtwerkstoff handelt es sich vorzugsweise um Santopren, einem thermoelastischen Elastomere (TPE), das die spezielle Eigenschaft aufweist, am Hartmaterial zu haften. Die durch die erfindungsgemäße Abdichtung erzielte IP-Schutzart für Straßenfahrzeuge nach DIN 40050, Teil 9, und zwar IP69K oder alternativ IP6K9K, besagt, dass die Dichtung einerseits staubdicht und andererseits Hochdruck-Dampfstrahl dicht ist. Die erfindungsgemäße Dichtscheibe 31 ist vorzugsweise als Zwei-Korriponenten-Kunststoffspritzgussteil (2K-Teil) hergestellt. Hierdurch ergibt sich eine einstückige integrale Verbindung zwischen den Dichtbereichen 33, 34 und 35 sowie dem Tragkörper 32. Die Dichtscheibe 31 weist auf ihrer dem Stator 1 zugekehrten Seite einen umlaufenden axial vorstehenden Umfangssteg 36 auf, der im montierten Zustand der Dichtscheibe 31 auf dem Statorflansch 9 dessen Stirnfläche 24 einschließlich der Dome 26 umfangsgemäß umschließt. Hierbei laufen die Dome 26 durch entsprechend angepasste Öffnungen 37 der Dichtscheibe 31. Weiterhin weist die Dichtscheibe 31 auf ihrer dem Stator 1 zugekehrten Seite Führungs- und Stützansätze 38, 39 auf, wobei in Führungsansätzen 39 Öffnungen für das Hindurchstecken der zungenförmigen Motoranschlusskontakte 21 vorhanden sind. Über die Ansätze 38 erfolgt eine Abstützung der Dichtscheibe 31 an der stirnseitigen Umspritzung des Statorblechpaketes 2 im aufgesteckten Zustand der Dichtscheibe 31. Der äußere Dichtbereich 33 der Dichtscheibe 31 besteht aus einem umlaufenden Dichtwulst 41, der eine in axialer Richtung auf den Kühlflansch 12 vorstehende Dichtlippe 42 aufweist. Der Dichtwulst 41 und die Dichtlippe 42 umfassen die kreisförmige Dichtscheibe 31. Der Dichtwulst 41 dichtet einen Spalt zwischen dem Randsteg 17 und der Dichtscheibe 31 ab. Die Dichtscheibe 31 besitzt eine mittige Öffnung 43, deren Öffnungsdurchmesser derart bemessen ist, dass sie einen hohlzylindrischen Ansatz 45 am Anlageabschinitt 16 des Gehäuseflansches 12 im montierten Zustand umfasst. Der innere Dichtbereich 34 besteht aus einem Dichtwulst 46, der die mittige Öffnung 43 umschließt und der ebenfalls eine axial abstehende Dichtlippe 47 aufweist. Der Dichtwulst 46 dichtet einen Spalt zwischen dem hohlzylindrischen Ansatz 45 und der Dichtscheibe 31 ab. Die beiden Dichtwulste 41 und 46 werden durch radial verlaufende Dichtstege 48 miteinander verbunden, die den mittigen Dichtbereich 35 mit ausbilden. Diese radialen Dichtstege 48 stehen in Richtung auf den Gehäuseflansch 12 axial vor und die Anlageflächen der Dichtlippen 42, 47 sowie der radialen Dichtstege 48 liegen in einer gemeinsamen parallel zum Tragkörper 32 verlaufenden Dichtebene und liegen im montierten Zustand an dem Anlageabschnitt 16 dichtend an. Im Bereich der Durchtrittsöffnungen 19 für die Motoranschlusskontakte 21 sind auf der dem Gehäuseflansch 12 zugekehrten Seite der Dichtscheibe 31 Dichtkörper 49 aus demselben Material wie die übrigen Dichtbereiche 33, 34, 35 angespritzt, die zum mittleren Dichtbereich 35 gehören. Diese Dichtkörper 49 weisen ebenfalls Durchtrittsöffnungen für die Motoranschlusskontakte 21 auf und sind vorzugsweise konisch ausgebildet, so dass sich die Dicke ihrer Wandung zum oberen Ende verjüngt. Weiterhin weisen diese Dichtkörper 49 umfänglich verlaufende Dichtwulste 50 auf, die stufenförmig hintereinander angeordnet sind und deren gemeinsame Mantelfläche ebenfalls konisch verläuft. Diese Dichtkörper 49 sind derart dimensioniert, dass sie in die Durchtrittsöffnungen 19 der Isolierbuchsen 22 einsteckbar sind, wobei die Durchtrittsöffnungen 19 ein konisches Gegenprofil zu den Dichtkörpern 49 aufweisen, siehe Fig. 7, so dass sich die Durchtrittsöffnungen 19 nach innen konisch verjüngen. Die Dichtkörper 49 dichten im eingesteckten Zustand die Durchtrittsöffnungen 19 sowie die in ihnen vorhandenen Durchtrittsöffnungen für die Motoranschlusskontakte 21 unmittelbar ab, so dass durch diese keine Feuchtigkeit vom Stator 1 in das Elektronikgehäuse eintreten kann. Der äußere Dichtbereich 33 mit dem Dichtwulst 41 und der Dichtlippe 42 sowie der innere Dichtbereich 34 mit dem Dichtwulst 46 und der Dichtlippe 47 stellen eine mittelbare Abdichtung der Öffnungen 37 und der Löcher 18 dar, da in Verbindung mit den radialen Dichtstegen 48, die die mittigen Dichtbereiche 35 mit ausbilden, Dichtkammern gebildet werden, in denen die Öffnungen 37 für die Dome 26 und die Löcher 18 liegen. In diese Dichtkammern kann Feuchtigkeit von außen nicht eindringen, da dies durch den äußeren und inneren Dichtbereich 35, 34 sowie die radialen Dichtstege 48 verhindert wird.

Weiterhin ist zu erkennen, dass in der Dichtscheibe 31 sacklochartige Vertiefungen 51 vorhanden sind, in die die Montagezapfen 23 hineinragen, so dass eine formschlüssige Verbindung mit dem Gehäuseflansch 12 gegeben ist.

Die erfindungsgemäße Ausgestaltung der Dichtscheibe 31 ermöglicht es, dass diese auf dem Stator 1 vormontiert werden kann und dann der Stator 1 mit der vormontierten Dichtscheibe 31 mit dem Kühl- bzw. Gehäuseflansch 12 verbunden werden kann.

## Patentansprüche

1. Statoreinheit für einen Elektromotor, insbesondere einen Außenläufermotor, bestehend aus einem Stator (1) mit einem Statorblechpaket (2) und Statorwicklungen (4) und einer Statorbuchse (3) sowie einem einendig ausgebildeten Statorflansch (9), an dem ein Gehäuseflansch (12) eines Gehäuses (11) zur Aufnahme einer Motorsteuerung oder dergleichen befestigt ist, sowie mit vom Stator (1) durch Durchtrittsöffnungen (19) des Gehäusesflansches (12) verlaufenden Motoranschlusskontakten (21) und mit durch Befestigungslöcher (18) des Gehäuseflansches (12) verlaufenden und im Stator (1) befestigten Befestigungsmitteln, wobei eine Dichtscheibe (31) für die Abdichtung der Motoranschlusskontakte (21) vorhanden ist,
**dadurch gekennzeichnet, dass** der Gehäuseflansch (12) in seinem Mittenbereich einen Anlageabschnitt (16) aufweist und die Dichtscheibe (31) zwischen dem Stator (1) und dem Gehäuseflansch (12) im Bereich des Anlageabschnittes (16) angeordnet ist und die Dichtscheibe (31) Dichtbereiche (33, 34, 35) aus elastischem Kunststoff aufweist, die derart angeordnet und ausgebildet sind, dass eine unmittelbare und/oder mittelbare Abdichtung der Durchtrittsöffnungen (19) und/oder der Befestigungslöcher (18) gegen Feuchtigkeitsdurchtritt gegeben ist, indem die Dichtscheibe (31) aus einem Tragkörper (32) gebildet ist, an dem die Dichtbereiche (33, 34, 35) als innerer Dichtbereich (34), als mittiger Dichtbereich (35) und als äußerer Dichtbereich (33) ausgebildet sind, sowie im Anlageabschnitt (16) die Durchtrittsöffnungen (19) für die Motoranschlusskontakte (21) und die Befestigungslöcher (18) für die Befestigungsmittel vorhanden sind.

2. Statoreinheit nach Anspruch 1,
**dadurch gekennzeichnet, dass** der Mittenbereich kreisförmig ausgebildet ist, und umfangsgemäß von einem axial vorstehenden Randsteg (17) umfasst wird, wobei dieser Randsteg (17) von einer Kunststoffumspritzung (13) des Gehäuseflansches (12) gebildet ist.

3. Statoreinheit nach Anspruch 1 oder 2,
**dadurch gekennzeichnet, dass** innerhalb des Anlageabschnitts (16) drei um 120 ° gegeneinander versetzte Befestigungslöcher (18) ausgebildet sind.

4. Statoreinheit nach einem der Ansprüche 1 bis 3,
**dadurch gekennzeichnet, dass** dieDurchtrittsöffnungen(19)in von der Kunststoffumspritzung (13) des Gehäuseflansches (12) innerhalb des Anlageabschnittes (16) gebildeten lsolierbuchsen (22) ausgebildet sind.

5. Statoreinheit nach einem der Ansprüche 1 bis 4,
**dadurch gekennzeichnet, dass** derStatorflansch(9)eine ringförmige Stirnfläche (24) besitzt, an der drei um vorzugsweise 120 ° gegeneinander versetzte Dome (26) vorhanden sind, die Einschrauböffnungen (27) besitzen, die im montierten Zustand mit den Schraublöchern (18) fluchten.

6. Statoreinheit nach einem der Ansprüche 1 bis 5,
**dadurch gekennzeichnet, dass** derTragkörper(32)auseinem Kunststoff-Hartmaterial besteht.

7. Statoreinheit nach einem der Ansprüche 1 bis 6,
**dadurch gekennzeichnet, dass** dieDichtscheibe(31)als Zwei-Komponenten-Kunststoffspritzgussteil hergestellt ist.

8. Statoreinheit nach einem der Ansprüche 1 bis 7,
**dadurch gekennzeichnet, dass** die Dichtscheibe (31) auf ihrer dem Stator (1) zugekehrten Seite einen umlaufenden, axial vorstehenden Umfangssteg (36) besitzt, der im montierten Zustand der Dichtscheibe (31) auf dem Statorflansch (9) dessen Stirnfläche (24) einschließlich der Dome (26) umfangsgemäß umschließt.

9. Statoreinheit nach einem der Ansprüche 1 bis 8,
**dadurch gekennzeichnet, dass** die Dome (26) durch an diese angepasste Öffnungen (37) der Dichtscheibe (31) verlaufen sowie die Dichtscheibe (31) auf ihrer dem Stator (1) zugekehrten Seite Führungsansätze (38) besitzt, die Öffnungen für das Hindurchstecken der Motoranschlusskontakte (21) aufweisen.

10. Statoreinheit nach einem der Ansprüche 1 bis 9,
**dadurch gekennzeichnet, dass** der äußere Dichtbereich (33) der Dichtscheibe (31) aus einem umlaufenden Dichtwulst (41) besteht, der eine in axialer Richtung auf den Kühlflansch (12) vorstehende Dichtlippe (42) aufweist), und der Dichtwulst (41) und die Dichtlippe (42) die kreisförmige Dichtscheibe (31) umfassen.

11. Statoreinheit nach einem der Ansprüche 1 bis 10,
**dadurch gekennzeichnet, dass** dieDichtscheibe(31)eine mittige Öffnung (43) besitzt, deren Öffnungsdurchmesser derart bemessen ist, dass sie einen hohlzylindrischen Ansatz (45) am Anlageabschnitt des Gehäuseflansches (12) im montierten Zustand umfasst.

12. Statoreinheit nach einem der Ansprüche 1 bis 11,
**dadurch gekennzeichnet, dass** der innere Dichtbereich (34) aus einem Dichtwulst (46) besteht, der die mittige Öffnung (43) umschließt und der eine axial abstehende Dichtlippe (47) aufweist und einen Spalt zwischen dem hohlzylindrischen Ansatz (45) und der Dichtscheibe (31) abdichtet).

13. Statoreinheit nach einem der Ansprüche 1 bis 12,
**dadurch gekennzeichnet, dass** die beiden Dichtwulste (41, 46) durch radial verlaufende Dichtstege (48) miteinander verbunden sind, die den mittigen Dichtbereich (35) mit ausbilden und in Richtung auf den Gehäuseflansch (12) axial vorstehen, wobei die Anlageflächen der Dichtlippen (42, 47) sowie der radialen Dichtstege (48) in einer gemeinsamen parallel zum Tragkörper (32) verlaufenden Dichtebene liegen sowie im montierten Zustand an dem Anlageabschnitt (16) dichtend anliegen.

14. Statoreinheit nach einem der Ansprüche 1 bis 13,
**dadurch gekennzeichnet, dass** im Bereich der Durchtrittsöffnung (19) für die Motoranschlusskontakte (21) auf der dem Gehäuseflansch (12) zugekehrten Seite der Dichtscheibe (31) Dichtkörper (49) angeformt sind, die aus demselben Material wie die übrigen Dichtbereiche (33, 34, 35) bestehen und die Durchtrittsöffnungen für die Motoranschlusskontakte (41) besitzen.

15. Statoreinheit nach einem der Ansprüche 1 bis 14,
**dadurch gekennzeichnet, dass** die Dichtkörper (49) konisch ausgebildet sind, so dass sich die Dicke ihrer Wandung zum oberen freien Ende verjüngt und die umfänglich verlaufende Dichtwulste (50) besitzen, die stufenförmig hintereinander angeordnet sind und deren gemeinsame Mantelfläche ebenfalls konisch verläuft.

16. Statoreinheit nach einem der Ansprüche 1 bis 15,
**dadurch gekennzeichnet, dass** die Dichtkörper (49) derart dimensioniert sind, dass sie in die Durchtrittsöffnungen (19) der lsolierbuchsen (22) einsteckbar sind, wobei die Durchtrittsöffnungen (19) ein konisches Gegenprofil zu den Dichtkörpern (49) aufweisen, so dass sich die Durchtrittsöffnungen (19) nach innen konisch verjüngen.

17. Statoreinheit nach einem der Ansprüche 1 bis 16,
**dadurch gekennzeichnet, dass** in der Dichtscheibe (31) sacklochartige Vertiefungen (51) vorhanden sind, in die Führungsansätze (38), die im Anlageabschnitt (16) des Gehäuseflansches (12) ausgebildet sind, hineinragen.

18. Dichtscheibe (31) zur Verwendung bei einer Statoreinheit nach einem oder mehreren der Ansprüche 1 bis 17,
**gekennzeichnet durch** die Merkmale eines oder mehrerer der Ansprüche 1 bis 17.

## Claims

1. A stator unit for an electric motor, in particular an external rotor motor, consisting of a stator (1) with a stator iron core (2) and stator windings (4) and a stator bushing (3) as well as a stator flange (9), at one end, to which there is secured a housing flange (12) of a housing (11) for receiving a motor control means or the like, as well as with motor connection contacts (21), running from the stator (1) through through-passage openings (19) of the housing flange (12), and with securing means, running though securing holes (18) of the housing flange (12) and secured in the stator (1), wherein a sealing disc (31) for the sealing of the motor connection contacts (21) is present, **characterized in that** the housing flange (12) has a contact portion (16) in its middle region and the sealing disc (31) is arranged between the stator (1) and the housing flange (12) in the region of the contact portion (16) and the sealing disc (31) has sealing regions (33, 34, 35) of resilient plastics material which are arranged and formed in such a manner that a direct and/or indirect sealing of the through-passage openings (19) and/or the securing holes (18) against moisture penetration is produced **in that** the sealing disc (31) is formed of a supporting body (32) on which the sealing regions (33, 34, 35) are formed as an inner sealing region (34), as a middle sealing region (35) and as an outer sealing region (33) and the through-passage openings (19) for the motor connection contacts (21) and the securing holes (18) for the securing means are present in the contact portion (16).

2. A stator unit according to claim 1, **characterized in that** the middle region is circular and circumferentially encircled by an axially projecting edge strip (17), wherein this edge strip (17) is formed by a plastics encapsulation (13) of the housing flange (12).

3. A stator unit according to claim 1 or 2, **characterized in that** three securing holes (18) offset by 120° in relation to one another are formed within the contact portion (16).

4. A stator unit according to any one of claims 1 to 3, **characterized in that** the through-passage openings (19) are formed in insulating bushings (22) which are formed within the contact portion (16) by the plastics encapsulation (13) of the housing flange (12).

5. A stator unit according to any one of claims 1 to 4, **characterized in that** the stator flange (9) has an annular front face (24) on which there are three domes (26) which are offset through preferably 120° in relation to one another and which have threaded openings (27) which are aligned with the screw holes (18) in the mounted state.

6. A stator unit according to any one of claims 1 to 5, **characterized in that** the supporting body (32) is made of a plastics hard material.

7. A stator unit according to any one of claims 1 to 6, **characterized in that** the sealing disc (31) is manufactured as a two-component plastics injection-molded part.

8. A stator unit according to any one of claims 1 to 7, **characterized in that** on its side facing the stator (1), the sealing disc (31) has an encircling, axially-projecting circumferential strip (36) which in the mounted state of the sealing disc (31) on the stator flange (9) circumferentially surrounds its front face (24) including the domes (26).

9. A stator unit according to any one of claims 1 to 8, **characterized in that** the domes (26) run through openings (37), of the sealing disc (31), matched thereto and the sealing disc (31) has guide attachments (38) on its side facing the stator (1), these guide attachments having openings for the through placement of the motor connection contacts (21).

10. A stator unit according to any one of claims 1 to 9, **characterized in that** the outer sealing region (33) of the sealing disc (31) is composed of an encircling sealing bead (41) which has a sealing lip (42) projecting in an axial direction toward the cooling flange (12), and the sealing bead (41) and the sealing lip (42) encircle the circular sealing disc (31).

11. A stator unit according to any one of claims 1 to 10, **characterized in that** the sealing disc (31) has a central opening (43) whose opening diameter is dimensioned in such a manner that it surrounds a hollow-cylindrical attachment (45) on the contact portion of the housing flange (12) in the mounted state.

12. A stator unit according to any one of claims 1 to 11, **characterized in that** the inner sealing region (34) is composed of a sealing bead (46) which encircles the central opening (43) and which has an axially projecting sealing lip (47) and seals a gap between the hollow-cylindrical attachment (45) and the sealing disc (31).

13. A stator unit according to any one of claims 1 to 12, **characterized in that** the two sealing beads (41, 46) are connected to one another by radially running sealing strips (48) which together form the middle sealing region (35) and which axially project in the direction of the housing flange (12), wherein the contact surfaces of the sealing lips (42, 47) and the radial sealing strips (48) lie in a common sealing plane running parallel to the supporting body (32) and contact the contact portion (16) in a sealing manner in the mounted state.

14. A stator unit according to any one of claims 1 to 13, **characterized in that** in the region of the through-passage opening (19) for the motor connection contacts (21), sealing bodies (49) are formed on the side of the sealing disc (31) facing the housing flange (12), which sealing bodies are made of the same material as the other sealing regions (33, 34, 35) and have the through-passage openings for the motor connection contacts (41).

15. A stator unit according to any one of claims 1 to 14, **characterized in that** the sealing bodies (49) are conical, so that the thickness of their wall tapers toward the upper, free end, and have the circumferentially running sealing beads (50) which are arranged stepwise one behind the other and whose common outer surface likewise runs conically.

16. A stator unit according to any one of claims 1 to 15, **characterized in that** the sealing bodies (49) are dimensioned in such a manner that they can be inserted into the through-passage openings (19) of the insulating bushings (22), wherein the through-passage openings (19) have a conical counter profile to the sealing bodies (49), so that the through-passage openings (19) taper conically inwards.

17. A stator unit according to any one of claims 1 to 16, **characterized in that** blind-bore-like cavities (51) are present in the sealing disc (31) and guide attachments (38), formed in the contact portion (16) of the housing flange (12), project into these cavities.

18. A sealing disc (31) for use with a stator unit according to one or more of claims 1 to 17, **characterized by** the features of one or more of claims 1 to 17.

## Revendications

1. Unité de stator pour un moteur électrique, en particulier un moteur à induit extérieur, composée d'un stator (1) avec un empilage de tôles de stator (2), des enroulements de stator (4) et une douille de stator (3) ainsi que, formée à une extrémité, une bride de stator (9) à laquelle est fixée une bride de boîtier (12) d'un boîtier (11) destiné à recevoir une commande de moteur ou analogue, ainsi qu'avec des contacts de connexion de moteur (21) s'étendant depuis le stator (1) à travers des ouvertures de passage (19) de la bride de boîtier (12) et avec des moyens de fixation s'étendant à travers des trous de fixation (18) de la bride de boîtier (12) et fixés dans le stator (1), un disque d'étanchéité (31) étant présent pour assurer l'étanchéité des contacts de connexion de moteur (21), **caractérisée en ce que** la bride de boîtier (12) présente une partie d'appui (16) dans sa zone centrale, et le disque d'étanchéité (31) est disposé entre le stator (1) et la bride de boîtier (12) dans la zone de la partie d'appui (16), et le disque d'étanchéité (31) présente des zones d'étanchéité (33, 34, 35) en matière plastique élastique qui sont disposées et formées de façon qu'une étanchéité directe et/ou indirecte des ouvertures de passage (19) et/ou des trous de fixation (18) contre la pénétration d'humidité soit assurée, le disque d'étanchéité (31) étant constitué d'un corps porteur (32) sur lequel les zones d'étanchéité (33, 34, 35) sont formées en tant que zone d'étanchéité intérieure (34), zone d'étanchéité centrale (35) et zone d'étanchéité extérieure (33), et les ouvertures de passage (19) pour les contacts de connexion de moteur (21) et les trous de fixation (18) pour les moyens de fixation étant présents dans la partie d'appui (16).

2. Unité de stator selon la revendication 1, **caractérisée en ce que** la zone centrale est de forme circulaire et est entourée périphériquement par une nervure marginale (17) en saillie axiale, cette nervure marginale (17) étant formée par un surmoulage en matière plastique (13) de la bride de boîtier (12).

3. Unité de stator selon la revendication 1 ou 2, **caractérisée en ce que** trois trous de fixation (18) décalés entre eux de 120° sont formés à l'intérieur de la partie d'appui (16).

4. Unité de stator selon l'une des revendications 1 à 3, **caractérisée en ce que** les ouvertures de passage (19) sont formées dans des douilles isolantes (22) formées à l'intérieur de la partie d'appui (16) par le surmoulage en matière plastique (13) de la bride de boîtier (12).

5. Unité de stator selon l'une des revendications 1 à 4, **caractérisée en ce que** la bride de stator (9) possède une face frontale annulaire (24) sur laquelle sont présents trois dômes (26), de préférence décalés entre eux de 120°, qui possèdent des ouvertures de vissage (27), lesquelles, à l'état monté, sont alignées avec les trous de vis (18).

6. Unité de stator selon l'une des revendications 1 à 5, **caractérisée en ce que** le corps porteur (32) est réalisé dans une matière plastique dure.

7. Unité de stator selon l'une des revendications 1 à 6, **caractérisée en ce que** le disque d'étanchéité (31) est réalisé sous la forme d'une pièce en matière plastique bicomposant moulée par injection.

8. Unité de stator selon l'une des revendications 1 à 7, **caractérisée en ce que** le disque d'étanchéité (31) possède, de son côté tourné vers le stator (1), une nervure périphérique (36) en saillie axiale qui, lorsque le disque d'étanchéité (31) est monté sur la bride de stator (9), entoure périphériquement sa face frontale (24), y compris les dômes (26).

9. Unité de stator selon l'une des revendications 1 à 8, **caractérisée en ce que** les dômes (26) s'étendent à travers des ouvertures (37) du disque d'étanchéité adaptées à ceux-ci (31), et le disque d'étanchéité (31) possède, de son côté tourné vers le stator (1), des saillies de guidage (38) qui présentent des ouvertures pour le passage des contacts de connexion de moteur (21).

10. Unité de stator selon l'une des revendications 1 à 9, **caractérisée en ce que** la zone d'étanchéité extérieure (33) du disque d'étanchéité (31) est constituée d'un bourrelet d'étanchéité périphérique (41) qui présente une lèvre d'étanchéité (42) faisant saillie en direction axiale sur la bride de refroidissement (12), et le bourrelet d'étanchéité (41) et la lèvre d'étanchéité (42) entourent le disque d'étanchéité circulaire (31).

11. Unité de stator selon l'une des revendications 1 à 10, **caractérisée en ce que** le disque d'étanchéité (31) possède une ouverture centrale (43) dont le diamètre d'ouverture est dimensionné de façon qu'elle entoure, à l'état monté, une saillie cylindrique creuse (45) sur la partie d'appui de la bride de boîtier (12).

12. Unité de stator selon l'une des revendications 1 à 11, **caractérisée en ce que** la zone d'étanchéité intérieure (34) est constituée d'un bourrelet d'étanchéité (46) qui entoure l'ouverture centrale (43) et qui présente une lèvre d'étanchéité (47) en saillie axiale et rend étanche une fente entre la saillie cylindrique creuse (45) et le disque d'étanchéité (31).

13. Unité de stator selon l'une des revendications 1 à 12, **caractérisée en ce que** les deux bourrelets d'étanchéité (41, 46) sont reliés entre eux par des nervures d'étanchéité (48) s'étendant radialement qui contribuent à former la zone d'étanchéité centrale (35) et font saillie axialement dans la direction de la bride de boîtier (12), les surfaces d'appui des lèvres d'étanchéité (42, 47) ainsi que des nervures d'étanchéité radiales (48) se trouvant dans un plan d'étanchéité commun qui s'étend parallèlement au corps porteur (32) et étant, à l'état monté, en appui étanche sur la partie d'appui (16).

14. Unité de stator selon l'une des revendications 1 à 13, **caractérisée en ce que**, dans la zone de l'ouverture de passage (19) pour les contacts de connexion de moteur (21), du côté du disque d'étanchéité (31) tourné vers la bride de boîtier (12), sont formés des corps d'étanchéité (49) qui sont constitués du même matériau que les autres zones d'étanchéité (33, 34, 35) et qui possèdent des ouvertures de passage pour les contacts de connexion de moteur (41).

15. Unité de stator selon l'une des revendications 1 à 14, **caractérisée en ce que** les corps d'étanchéité (49) sont de forme conique, de sorte que l'épaisseur de leur paroi diminue vers l'extrémité libre supérieure, et possèdent des bourrelets d'étanchéité périphériques (50) qui sont disposés en gradins successifs et dont la surface d'enveloppe commune est également de forme conique.

16. Unité de stator selon l'une des revendications 1 à 15, **caractérisée en ce que** les corps d'étanchéité (49) sont dimensionnés de façon à pouvoir être insérés dans les ouvertures de passage (19) des douilles isolantes (22), les ouvertures de passage (19) présentant un profil conique complémentaire à celui des corps d'étanchéité (49), de sorte que les ouvertures de passage (19) se rétrécissent en cône vers l'intérieur.

17. Unité de stator selon l'une des revendications 1 à 16, **caractérisée en ce que** dans le disque d'étanchéité (31) sont présents des creux (51) en forme de trous borgnes dans lesquels s'enfoncent les saillies de guidage (38) qui sont formées dans la partie d'appui (16) de la bride de boîtier (12).

18. Disque d'étanchéité (31) destiné à être utilisé dans une unité de stator selon l'une ou plusieurs des revendications 1 à 17, **caractérisé par** les caractéristiques d'une ou plusieurs des revendications 1 à 17.
